Europäisches Patentamt

(19) European Patent Office

Office européen des brevets

(11) **EP 0 415 345 B1**

(12) **EUROPEAN PATENT SPECIFICATION**

(45) Date of publication and mention
of the grant of the patent:
**06.11.1996 Bulletin 1996/45**

(51) Int. Cl.⁶: **B32B 15/08**

(21) Application number: **90116469.9**

(22) Date of filing: **28.08.1990**

(54) **Composite steel sheet having high workability for drawn and ironed cans**

Bearbeitungsfähiger Stahlblechverbundstoff für gezogene Dosen

Feuille composite en acier à bonne maniabilité pour des boîtes embouties

(84) Designated Contracting States:
**DE FR GB**

(30) Priority: **30.08.1989 JP 221680/89**

(43) Date of publication of application:
**06.03.1991 Bulletin 1991/10**

(73) Proprietor: **NIPPON STEEL CORPORATION**
**Tokyo (JP)**

(72) Inventors:
• **Hayashi, Tomohiko,**
**c/o Nippon Steel Corporation**
**Kitakyushu-shi, Fukuoka-ken (JP)**
• **Oyagi, Yashichi,**
**c/o Nippon Steel Corporation**
**Kitakyushu-shi, Fukuoka-ken (JP)**
• **Nishida, Hiroshi,**
**c/o Nippon Steel Corporation**
**Kitakyushu-shi, Fukuoka-ken (JP)**

(74) Representative: **VOSSIUS & PARTNER**
**Postfach 86 07 67**
**81634 München (DE)**

(56) References cited:
EP-A- 0 312 304          DE-A- 3 227 282
GB-A- 1 566 422          GB-A- 2 224 238

**Description**

The present invention relates to a composite steel sheet as a material for cans, particularly for drawn and ironed cans which have a laminated resin layer at least on the internal face of the cans.

Cans are classified, according to the construction of can bodies, into two types: three-piece cans which are constituted of a top cover, a bottom cover, and a drum; and two-piece cans which are constituted of an integrated bottom cover and drum, and a separate top cover.

At the moment, widely used are two-piece cans manufactured by DrD (drawing and redrawing) or by DI (drawing and ironing), of which two-piece cans manufactured by DI are used increasingly in number year after year for carbonated beverages and beer. Aluminum sheets or tin-plated steel sheets are used as the material for the cans by drawing and ironing.

At the moment, aluminum is used more in quantity. The main reasons therefor are that an aluminum sheet can be worked more readily through drawing and ironing than a tin-plated steel sheet, and that a single coat is sufficient for internal coat of cans after drawing and ironing because of the higher corrosion resistance of aluminum. On the other hand, tin-plated steel sheets have been improved in the manufacturing technique in ease of drawing and ironing to be equal to aluminum sheet. The steel sheet, however, cannot compete with aluminum sheet in corrosion resistance, so that tin-plated steel sheets for cans need to have at least double internal coating. The double coating naturally results in low productivity owing to increase of working steps, and rise of the production cost. Accordingly, development of a can material has been desired which requires only single or no internal coating of the cans.

To meet such requirements, practice of drawing and ironing after coating had been conducted was disclosed in Japanese Patent Laid-open Publications No. 59-94585 or No. 54-132683. The cans manufactured according to these prior art disclosures have not been brought into practical use because of insufficiency in practical properties, especially in corrosion resistance of the cans.

The laminated steel sheets having a resin film laminated on the surface could be improved in corrosion resistance in comparison with those of the prior art by selecting the film thickness on the surface of the steel sheets.

Such laminated steel sheets having a resin film laminated on the surface are disclosed in Japanese Patent Laid-open Publications No. 60-168643 and No. 60-170532.

Such prior art processes have not been practiced yet because of the insufficient corrosion resistance and high manufacturing cost of the cans.

As described above, the tin-plated steel sheet as a material for cans produced by conventional drawing and ironing needs to be subjected to two or more times of coating on the internal surface after worked into a can in view of its corrosion resistance.

The object of present invention is to provide a process for manufacturing a laminated steel sheet which is workable into a can having corrosion resistance of the same level as of an aluminum can even with single or no coating of the internal face after the can is formed, and in a simplified process.

According to an aspect of the present invention, there is provided a composite steel sheet having superior formability for a drawn and ironed can and comprising a resin film laminated at least on one side thereof, said resin film being a polyester resin film having one or both of heat of cold crystallization ($H_c$) of 7 cal/g or less and heat of fusion ($H_f$) of 10 cal/g or less; density of 1.370 g/cm$^3$ or less; and weight-average molecular weight of 70,000 or less.

According to another aspect of the present invention, there is provided a composite steel sheet having superior formability for a drawn and ironed can and comprising a resin film laminated on a tin film and/or a chromate film on one side of the composite steel sheet to be worked into an internal face of the can, and a tin film of 0.5 - 15 g/m$^2$ on the other side of the sheet to be worked into an external face of the can, said resin film being a polyester resin film having one or both of the heat of cold crystallization ($H_c$) of 7 cal/g or less and the heat of fusion ($H_f$) of 10 cal/g or less; the density of 1.370 g/cm$^3$ or less; and weight-average molecular weight of 70,000 or less.

Further the present invention is characterized by the thickness of the polyester film in the range of from 10 to 60 $\mu$m.

The composite steel sheet of the invention superior in formability for drawn and ironed cans comprises, on at least one side of the steel sheet, a polyester resin film having one or both of the heat of cold crystallization ($H_c$) of 7 cal/g or less and the heat of fusion ($H_f$) of 10 cal/g or less; the density of 1.370 g/cm$^3$ or less; and weight-average molecular weight of 70,000 or less.

The reasons are explained below why the resin film laminated on at least on one side of the steel sheet is limited to a polyester resin, and why the heat of cold crystallization, the heat of fusion, the density, the weight-average molecular weight, and the film thickness are specified.

The composite steel sheet superior in formability for drawn and ironed cans is a material for drawing and ironing.

The can produced by drawing and ironing is formed through steps of drawing, redrawing, and ironing. The ironing is usually conducted by two-step ironing (2D-2I system) or three-step ironing (2D-3I system). Generally in the forming process, the drawing is conducted with a press, and the subsequent redrawing and the ironing are conducted with a separate forming machine.

2

The DI formability of the composite steel sheet having a resin film laminated on the surface thereof is explained below.

Since neither a process of drawing nor a process of redrawing accompanies elongation of the material, any composite steel sheet which has laminated resin film having a melting point higher than the temperature reached by heat generation at the working may be subjected to the drawing and the redrawing. The maximum temperature of the material reached by the heat generation at the working depends on the thickness of the steel sheet, and in the case of 0.5 mm-thick steel sheet, the temperature is approximately 100 °C according to the measurement made by the inventors of the present invention.

On the other hand, the ironing accompanies a large extent of elongation of the material. For example, a sheet material of 0.3 mm thick is forced to become 0.1 mm thick at the thinnest wall portion in ironing of cans. Therefore, even by use of a coolant, the material temperature may exceed 200 °C.

The maximum temperature of the material at the ironing depends on the type of the ironing: a 2D-2I system or a 2D-3I system. The quantity of heat generated is larger in the 2D-2I system than in the 2D-3I system if the extent of the working (ironing degree) is the same. Here, the ironing degree is defined as below:

$$\text{(Ironing degree)} = [(\text{Thickness of sheet before working} - \text{Thickness of can wall after working}) / (\text{Thickness of sheet before working})] \times 100$$

The maximum temperature of the material due to heat generation may be estimated from the change of unmelted Sn-plated steel plate to become glossy after the drawing and ironing as if it was melted.

Accordingly, if a resin having a low melting point, for example, polypropylene having a melting point of 165 °C is used as the resin in the composite steel sheet for drawing and ironing, the composite sheet cannot give a normal can body in the drawing and ironing owing to a poor strip-out property, giving a collapsed can. The strip-out property is affected by hardness of the resin as well as the melting point of the resin in the composite steel sheet.

The inventors have found that a polyester resin, which is resistant to the heat generated at the drawing and ironing, and is relatively hard, has highest DI formability. For this reason, the resin film to be laminated to the steel sheet in the present invention is limited to a polyester resin.

The reason of limiting the heat of cold crystallization ($H_c$), the heat of fusion ($H_f$), the density, and the weight-average molecular weight are explained below.

Firstly the density is discussed. In the present invention, the polyester resin to be laminated onto a steel sheet has a density of not more than 1.370 g/cm$^3$. It means that the crystal structure of the polyester resin film laminated on the steel sheet is rather amorphous even though polyester resins is inherently of crystalline nature. As described above, in ironing in drawing and ironing, the material is greatly elongated: approximately 300 % instantaneously.

If the polyester resin is crystalline, it cannot stand the large elongation, thus causing a large crack in the resin film on a can wall portion. The crack of the resin film occurs frequently in the resin having an oriented crystal structure, such as in a stretched resin film.

The inventors of the present invention have elucidated, as the result of comprehensive investigation, that the aforementioned crack of the resin film arises from the crystal structure of the polyester resin. Based on this elucidation, the inventors of the present invention have found that the polyester resin should be made amorphous to have a density of not more than 1,370 g/cm$^3$ in order that the resin film forms no crack, or very little crack if it is formed on a can wall portion after drawing and ironing.

The reason for limiting the heat of cold crystallization ($H_c$) to not more than 7 cal/g is discussed below. The polyester resin film employed in the present invention should be amorphous in a laminated state on a steel sheet. When a resin in an amorphous state is investigated with a differential scanning calorimeter (DSC), an exothermic peak is observed at a temperature of from 100 to 150 °C depending on the kind of the resin. This peak corresponds to the temperature of cold crystallization, and the size (area) of the peak is proportional to the heat of cold crystallization ($H_c$). The heat of cold crystallization ($H_c$) is represented by the unit of cal/g, which corresponds to the quantity of the change from amorphous state to crystalline state in 1 g of the resin. In the ironing, the resin layer of the material is ideally worked in an amorphous state. A crystallizable resin, however, will be oriented by elongation of the material at the ironing, and further crystallized by the heat generated at the ironing.

Moreover, the orientation and the crystallization begins when the ironing degree exceeds approximately 30 %, so that ironing with the ironing degree exceeding 30 % causes cracks in the resin film. In particular, many cracks are formed on a can wall by a high degree of ironing.

A polyester resin having the heat of cold crystallization ($H_c$) of 7 cal/g or less as in the present invention gives satisfactory drawn and ironed cans without crack on the can wall. If the heat of cold crystallization of the polyester resin laminated on a surface of a steel sheet exceeds 7 cal/g, the resin film on the wall comes to have cracks, impairing the corrosion-resistance of the can.

The reason for limiting the heat of fusion to not more than 10 cal/g is discussed below. In differential scanning calorimetry of a resin in an amorphous state, the glass transition point firstly appears, then the exothermic peak of cold crystallization appears, and finally the endothermic peak appears. This endothermic peak corresponds to the temperature where the crystal of the resin melts or to the melting point of the crystalline resin. The size (or the area) of the endothermic peak is proportional to the heat of fusion ($H_f$). The heat of fusion ($H_f$) is represented by the unit of cal/g, which is for the sum of the original crystal and the cold crystal formed during programmed temperature elevation in DSC measurement in 1 g of the resin. Larger heat of fusion means a higher crystallinity of the resin. In the present invention, the heat of fusion ($H_f$) of the polyester resin is limited to not more than 10 cal/g. The resin exhibiting the heat of fusion ($H_f$) of 10 cal/g or less, will give rise to no crack or extremely slight crack even at the wall portion of the can in drawing and ironing, so that the formed cans are satisfactory in corrosion resistance for practical uses. If the heat of fusion ($H_f$) exceeds 10 cal/g, the resin film comes to have crack at the wall portion of a can formed by drawing and ironing, and the can is not suitable for practical uses.

The reason for limiting the weight-average molecular weight (MW) of the polyester resin to not higher than 70,000 is discussed below. The wall of the can produced by drawing and ironing is formed by ironing. The bottom portion of the can is formed in a shape called a dome. At this bottom portion of the can, micro cracks in the resin may sometimes occur, which impair the corrosion resistance of the can. In the present invention, the weight-average molecular weight (MW) of the polyester resin is limited to not more than 70,000, because the inventors of the present invention have found that the weight-average molecular weight (MW) of the polyester resin greatly affects the occurrence of microcracks. The resins having weight-average molecular weight exceeding 70,000 come to have cracks at the laminated resin film at the bottom portion of the can. If the weight-average molecular weight is 70,000 or lower, the occurrence of cracks is suppressed, or even if crack occurs it is retained only limited thin surface layer portion, thus satisfactory cans being obtainable.

The reason is not clear why the weight-average molecular weight greatly affects the occurrence of microcracks in the laminated resin film at a can bottom. The inventors of the present invention, however, assume that a film of a polyester resin having been made non-crystalline has higher impact strength and exhibits larger elongation at a lower molecular weight, which is different from the case of a resin film in a oriented crystalline state.

The thickness of the polyester resin film laminated on the steel sheet in the present invention is discussed below. In the present invention, the thickness of the polyester resin film is in the range of from 10 to 60 $\mu$m. The wall portion of the can has been elongated by drawing and ironing, and made thin corresponding to the ironing degree. At ironing degree of 50 %, both the iron sheet as the base material and the polyester resin film come to have a thickness of approximately half in comparison with that before the ironing. Accordingly, if the thickness of the polyester film laminated on the steel sheet is less than 10 $\mu$m, a scratch occurring on the polyester resin film at the drawing and ironing may reach the steel sheet as the base material after the drawing and ironing, so that the corrosion resistance cannot be ensured. In particular, the problem arises if a steel sheet having been treated only chemically is used as the material.

On the other hand, at the thickness of the polyester resin of 60 $\mu$m or more, the corrosion resistance of the can is saturated.

Since the corrosion resistance of the can produced from the composite steel sheet depends also on the ironing degree in drawing and ironing, and the presence or the absence of an Sn film on a steel sheet, the thickness of the polyester resin film have to be decided taking the these factors in consideration. The corrosion resistance is also affected by the properties of the content to be packed into the can, so that the thickness of the polyester resin film should be decided also in consideration of the content in the can.

The polyester resin film employed in the present invention is made of a saturated polyester resin which is a polymer derived from a saturated polyvalent carboxylic acid and a saturated polyhydric alcohol. The saturated polyvalent carboxylic acid includes terephthalic acid, isophthalic acid, phthalic acid, adipic acid, sebacic acid and the like. The saturated polyhydric alcohol includes ethylene glycol, diethylene glycol, triethylene glycol, 1,4-butanediol, polyalkylene glycol derivatives, and the like. The polymer may be a homopolymer, a copolymer, or a blend thereof.

However, polyethylene terephthalate called PET for short, and polybutylene terephthalate called PBT for short are excluded from the present invention because they do not satisfy the requirements for the heat of cold crystallization and the heat of fusion specified in the present invention.

The density of the polyester resin film in the present invention is measured of the resin laminated onto a steel sheet according to a density-gradient tube method.

The heat of cold crystallization ($H_c$) and the heat of fusion ($H_f$) are measured from the DSC curve at a temperature elevation rate of 5°C/min by use of a polyester resin film laminated onto a steel sheet before drawing and ironing. In the present invention, the heat of cold crystallization ($H_c$) and the heat of fusion ($H_f$) may be measured in an alternative method such that the melting point ($T_m$) is measured firstly by DSC, the polyester resin is heated to a temperature of $T_m$ + 30°C, immediately thereafter it is cooled rapidly to make it amorphous, and the resulting amorphous polyester resin film is again subjected to DSC measurement to obtain the DSC curve.

The steel sheet as the base material employed in the present invention is described below.

4

Heretofore, Sn-plated steel sheets have been used as the base material of drawn and ironed cans. Since the surface of the steel sheet to become an external face of a can is also subjected to severe ironing, a material is preferable which has Sn, an effective solid lubricant, in a film form on the surface.

Various surface-treated steel sheets are applicable as the base material in the present invention. One of the most suitable base materials is a steel sheet having an Sn film on its surface to become external face of the can. The steel sheet having an Sn film on its surface preferably has adhering Sn, on the surface to become an external face of a can, in an amount of from 0.5 to 15 $g/m^2$ in view of DI formability.

The adhering Sn in an amount of less than 0.5 $g/m^2$ does not exhibit a lubricating effect in drawing and ironing, resulting in "biting" and sometimes breakage of the material. On the other hand, with the adhering Sn in an amount of more than 15 $g/m^2$, the lubricating effect is saturated, and it is uneconomical.

The surface of the steel sheet to be worked into an internal face of the can need not necessarily have an Sn film, because Sn may be melted by heat generated at drawing and ironing, which weaken the adhesion of a laminated polyester resin film onto a surface of a steel sheet, and in an extreme case, may cause exfoliation of the polyester resin film.

However, from the viewpoint of corrosion resistance of an internal face of a can, the presence of an Sn film is advantageous, so that it is advisable to decide, after confirming the maximum temperature of the material during drawing and ironing, whether the Sn film is to be provided or not on the surface to be worked into an internal face of a can. The amount of the Sn film, when it is provided on the surface for an internal face of the can, is preferably in the range of from 1 to 10 $g/m^2$ in view of retention of the corrosion resistance and the adhesion of the polyester film.

For the purpose of using Sn as a solid lubricant in drawing and ironing, it is desirable to provide an Sn film only on a surface of the steel sheet to be worked into an external face of a can and to treat chemically the surface of the steel to be worked into an internal face of a can. In such a case, the material is constituted, in thickness direction from the inside face of the can, with layers of a polyester resin film, a chromate-treated film, a steel plate, an Sn film, and a chromate-treated film. The chromate treatment herein means the one called chemical treatment which is conducted usually for a tinplate, and a film formation treatment of steel sheets called TFS (Tin Free Steel). Although such chromate treatment is not essential for the surface of the steel sheet to become an external face of the can, it is preferably conducted on the surface of the steel sheet to be worked into an external face of the can.

The process for laminating the polyester resin film on a steel sheet is described below. The polyester resin film to be laminated on the steel sheet is made amorphous in the present invention. To make the polyester resin amorphous, the polyester resin is heated to a temperature above its melting point to destroy its crystallinity, and immediately thereafter it is cooled rapidly. In a process, for example, a polyester resin is hot pressed onto a steel sheet (strip), the pressed matter is heated to a temperature above the melting point of the resin, and then it is dipped into water to be cooled rapidly. In order to bond the polyester resin onto a steel sheet by hot-pressing, the steel sheet needs to be heated to a predetermined temperature. The method of heating the steel sheet includes a method of passing the steel sheet (strip) through a furnace maintained at a high temperature, a method of heating by flowing electric current through the steel sheet, and a method of induction heating.

The method of rapid cooling of the composite steel sheet having been heated to a temperature above the melting point of the polyester includes a method of dipping the material into water, a method of blowing air against the material, a method of blowing a mixture of air and water (mist) against the material, and the combination of these methods. In any method, the cooling in a sufficient speed is important.

The present invention is constituted as described above. The practice of the present invention not only enables satisfactory practice of a continuous DI forming but also gives corrosion-resistant products. Accordingly, the use of the composite steel sheet of the present invention makes single coating of the internal surface sufficient or even no coating acceptable depending on a substance contained for the can produced by drawing and ironing of material constituted of steel sheet as the base material, while double coating is essential for the internal face according to prior art.

Detailed Description of the Preferred Embodiments:

The effect of the present invention is specifically shown below referring to examples.

Example 1

A steel sheet (thickness: 0.29 mm, temper: T-1) was employed which has Sn adhering on the surface to be worked into an external face of a can in an amount of 3 $g/m^2$, and has no Sn adhering but has a TFS treated film on the other surface to be worked into an internal face of a can. On the side to become an internal face of a can, a film of 15 $\mu$m thick, 30 $\mu$m thick, or 50 $\mu$m thick of a polyester resin, which had been derived from starting materials of terephthalic acid, isophthalic acid, or phthalic acid as a saturated polyvalent carboxylic acid, and ethylene glycol, triethylene glycol, or polyalkylene glycol derivative as a saturated polyhydric alcohol, was made to adhere by heating and immediately cooled rapidly to give a laminated composite steel sheet. The heat of cold crystallization ($H_c$), the heat of fusion ($H_f$), and the weight-average molecular weight (MW) are as below:

Film A ($H_c$: 3.7, $H_f$: 4.5, MW: 60000)
Film B ($H_c$: 2.4, $H_f$: 6.1, MW: 68000)
Film C ($H_c$: 6.7, $H_f$: 9.5, MW: 68000)
Film D ($H_c$: 4.7, $H_f$: 9.3, MW: 68000)
Film E ($H_c$: 5.2, $H_f$: 8.8, MW: 67000)
Film F ($H_c$: 6.7, $H_f$: 7.6, MW: 65000)
Film G ($H_c$: 6.1, $H_f$: 6.4, MW: 63000)
Film H ($H_c$: 6.5, $H_f$: 8.6, MW: 70000)
Film I ($H_c$: 3.8, $H_f$: 4.4, MW: 61000)
Film J ($H_c$: 2.8, $H_f$: 3.9, MW: 58000)
Film K ($H_c$: 7.3, $H_f$: 11.2, MW: 75000)
Film L ($H_c$: 7.5, $H_f$: 11.5, MW: 73000)

For comparison, 40 $\mu$m-thick PET film ($H_c$: 8.5, $H_f$: 12.0, MW: 75000) was made to adhere by heating onto the steel sheet to provide a laminated composite steel sheet.

The densities of the laminated resin films A to L, and the PET were measured and found to be within the range of 1.335 to 1.370 and to be amorphous. Separately for comparison, the aforementioned Film C after heat adhesion was gradually cooled to undergo crystallization (Film M) to provide a composite steel sheet. The density thereof was found to be 1.390.

The composite steel sheets A - M and the comparative PET composite steel sheet thus prepared were tested for continuous DI formability for a can of 211 mm in diameter (350-ml beer can size).

As the results, all the composite steel sheets could be molded by continuous drawing and ironing into as many as 100 or more cans, with satisfactory continuous-DIformability.

For checking non-defectiveness of the film of the DI-formed cans, an aqueous 1 % NaCl solution containing a 0.2 % surfactant was filled into the can, and empolying the can body as a cathode and a platinum electrode as an anode, an overvoltage of +6 V was applied to measure electric current. (Hereinafter this test is referred to as "QTV test".)

The QTV test was also conducted with a DI can which has a surface coat of an epoxy urea type paint prepared by spray coating in a dries film thickness of 8 $\mu$m and stoving at 200 °C for 10 minutes, on the internal face of the can.

For comparison, a commercial tinplate DI can (an internally double-coated can) was also subjected to the QTV test.

The test results are shown in Table 1. The composite steel sheets laminated with the polyester resin film of the present invention have corrosion resistance at the same level as, or at a higher level than that of presently commercially available Steel-DI cans, and single coating or non-coating may be realized. On the other hand, the composite steel sheets outside the scope of the present invention and the comparative PET-film-laminated steel sheet are significantly inferior in corrosion resistance although they are satisfactory in continuous DI formability.

Example 2

A steel sheet (thickness: 0.29 mm, temper: T-1) was employed which has, on the surface to be worked into an external face of a can, Sn adhering in an amount of 10 g/m$^2$, and has, on the other surface to be worked into an internal face of a can, no Sn adhering but has a TFS treated film. On the surface to be worked into an internal face of a can, Film A, Film B, Film C, Film G, Film J or the PET film was laminated according to the procedure of Example 1 to provide a laminated composite steel sheet. The composite steel sheets thus prepared were subjected to DI formability test, QTV test, and additional QTV test after overpainting on the internal face.

The results are similar to those of Example 1. The composite steel sheets of the present invention have corrosion resistance at the same level as, or at a higher level than that of presently commercially available DI-cans, and single coating or non-coating may be realized.

As described above, the composite steel sheet provided by the present invention has superior formability in drawing and ironing, and has a corrosion resistance such that one coating of an internal surface after the working will give the performance equal to, or higher than that of commercial tinplate DI cans having two internal surface coatings, and even non-coating may be acceptable for use for a less corrosive substance contained.

Accordingly, the production process of a can manufacturer may be simplified, so that the manufacturing cost is reduced, giving economical merit and remarkable contribution to the industry.

Table 1

| | | Film thickness (μm) | QTV value after DI working (mA/CAN) | QTV value after overpainting (mA/CAN) |
|---|---|---|---|---|
| Present invention | Composite steel plate A | 15<br>30<br>50 | 7 – 10<br>0.5 – 3<br>0.05 – 0.1 | 0.05 – 0.1<br>0.0<br>0.0 |
| | Composite steel plate B | 15<br>30<br>50 | 2 – 5<br>0.2 – 2<br>0.05 – 0.1 | 0.0<br>0.0<br>0.0 |
| | Composite steel plate C | 15<br>30<br>50 | 20 – 25<br>10 – 15<br>3 – 5 | 0.5 – 1.1<br>0.05 – 0.3<br>0.0 |
| | Composite steel plate D | 15<br>30<br>50 | 20 – 45<br>15 – 20<br>7 – 10 | 1 – 1.5<br>0.3 – 0.8<br>0.05 – 0.1 |
| | Composite steel plate E | 15<br>30<br>50 | 15 – 20<br>7 – 10<br>2 – 5 | 0.2 – 0.4<br>0.05 – 0.1<br>0.0 |
| | Composite steel plate F | 15<br>30<br>50 | 10 – 15<br>5 – 7<br>2 – 4 | 0.05 – 0.3<br>0.0<br>0.0 |

(continued)

EP 0 415 345 B1

(continued)

| | | Film thickness (μm) | QTV value after DI working (mA/CAN) | QTV value after overpainting (mA/CAN) |
|---|---|---|---|---|
| Present invention | Composite steel plate G | 15<br>30<br>50 | 10 - 15<br>5 - 8<br>0.8 - 1.2 | 0.07 - 0.1<br>0.0<br>0.0 |
| | Composite steel plate H | 15<br>30<br>50 | 20 - 30<br>5 - 15<br>4 - 7 | 0.8 - 0.9<br>0.05 - 0.3<br>0.0 |
| | Composite steel plate I | 15<br>30<br>50 | 7 - 10<br>0.5 - 3<br>0.05 - 0.3 | 0.0 - 0.08<br>0.0<br>0.0 |
| | Composite steel plate J | 15<br>30<br>50 | 3 - 5<br>0.3 - 1<br>0.03 - 0.08 | 0.0<br>0.0<br>0.0 |
| Outside present invention | Composite steel plate K | 15<br>30<br>50 | 130 - 150<br>90 - 150<br>70 - 130 | 30 - 40<br>25 - 35<br>10 - 15 |
| | Composite steel plate L | 15<br>30<br>50 | 150 - 200<br>70 - 100<br>50 - 60 | 30 - 40<br>15 - 20<br>6 - 9 |

(continued)

| | | Film thickness (μm) | QTV value after DI working (mA/CAN) | QTV value after overpainting (mA/CAN) |
|---|---|---|---|---|
| Outside present invention | Composite steel plate M | 15<br>30<br>50 | 350 - 450<br>320 - 430<br>300 - 430 | 30 - 40<br>30 - 38<br>25 - 35 |
| Comparison | PET film | 40 | 70 - 100 | 15 - 20 |
| | Commercial tinplate DI can | | 0.0 - 0.9 | |

**Claims**

1. A composite steel sheet having superior formability for a drawn and ironed can and comprising a resin film laminated at least on one side thereof, said resin film being a polyester resin film having one or both of heat of cold crystallization ($H_c$) of 2,9 x $10^4$ Joule/Kg (7 cal/g) or less and heat of fusion ($H_f$) of 4,2 x $10^4$ Joule/Kg (10 cal/g) or less; density of 1.370 g/cm$^3$ or less; and weight-average molecular weight of 70,000 or less.

2. A composite steel sheet having superior formability for a drawn and ironed can and comprising a resin film laminated on a tin film and/or a chromate film on one side of the composite steel sheet to be worked into an internal face of the can, and a tin film of 0.5 - 15 g/m$^2$ on the other side of the sheet to be worked into an external face of the can, said resin film being a polyester resin film having one or both of the heat of cold crystallization ($H_c$) of 2,9 x $10^4$ Joule/Kg (7 cal/g) or less and the heat of fusion ($H_f$) of 4,2 x $10^4$ Joule/Kg (10 cal/g) or less; the density of 1.370 g/cm$^3$ or less; and weight-average molecular weight of 70,000 or less.

3. The composite steel sheet of claim 1 or claim 2, wherein the polyester resin film has a thickness in the range of from 10 to 60 μm.

4. The composite steel sheet of claim 1, 2 or 3, wherein the polyester resin is amorphous.

**Patentansprüche**

1. Stahlblechverbundstoff von hervorragender Formbarkeit für eine gezogene und abstreckgezogene Dose und mit einer mindestens auf einer Seite auflaminierten Harzschicht, wobei die Harzschicht eine Polyesterharzschicht mit einer Kaltkristallisationswärme ($H_c$) von höchstens 2,9 • $10^4$ J/kg (7 cal/g) und einer Schmelzwärme ($H_f$) von höchstens 4,2 • $10^4$ J/kg (10 cal/g) oder beiden, einer Dichte von höchstens 1,370 g/cm$^3$ und einer massegemittelten Molekülmasse von höchstens 70000 ist.

2. Stahlblechverbundstoff von hervorragender Formbarkeit für eine gezogene und abstreckgezogene Dose und mit einer auf eine Zinnschicht und/oder eine Chromatschicht auflaminierten Harzschicht auf einer Seite des Stahlblechverbundstoffs, die zu einer Innenfläche der Dose umgeformt werden soll, und mit einer Zinnschicht von 0,5 - 15 g/m$^2$ auf der anderen Seite des Blechs, die zu einer Außenfläche der Dose umgeformt werden soll, wobei die Harzschicht eine Polyesterharzschicht mit einer Kaltkristallisationswärme ($H_c$) von höchstens 2,9 • $10^4$ J/kg (7 cal/g) und einer Schmelzwärme ($H_f$) von höchstens 4,2 • $10^4$ J/kg (10 cal/g) oder beiden, einer Dichte von höchstens 1,370 g/cm$^3$ und einer massegemittelten Molekülmasse von höchstens 70000 ist.

3. Stahlblechverbundstoff nach Anspruch 1 oder Anspruch 2, wobei die Polyesterharzschicht eine Dicke im Bereich von 10 bis 60 μm hat.

4. Stahlblechverbundstoff nach Anspruch 1, 2 oder 3, wobei das Polyesterharz im wesentlichen amorph ist.

**Revendications**

1. Feuille d'acier composite présentant une aptitude au formage supérieure destinée à une bôite étirée et emboutie et comprenant une couche de résine stratifiée sur au moins un côté de celle-ci, ladite couche de résine étant une couche de résine de polyester présentant l'une ou les deux parmi une chaleur de cristallisation à froid ($H_c$) de 2,9 x $10^4$ joules/kg (7 cal/g) ou moins, et une chaleur de fusion ($H_f$) de 4,2 x $10^4$ joules/kg (10 cal/g) ou moins, une densité de 1,370 g/cm$^3$ ou moins, et un poids moléculaire moyen de 70 000 ou moins.

2. Feuille d'acier composite présentant une aptitude au formage supérieure destinée à une boîte étirée et emboutie et comprenant une couche de résine stratifiée sur une couche d'étain et/ou une couche de chromate d'un côté de la feuille d'acier composite à usiner en une face interne de la boite, et une couche d'étain de 0,5 à 15 g/m$^2$ de l'autre côté de la feuille à usiner en une face externe de la boîte, ladite couche de résine étant une couche de résine de polyester présentant l'une ou les deux parmi une chaleur de cristallisation à froid ($H_c$) de 2,9 x $10^4$ joules/kg (7 cal/g) ou moins, et une chaleur de fusion ($H_f$) de 4,2 x $10^4$ joules/kg (10 cal/g) ou moins, une densité de 1,370 g/cm$^3$ ou moins, et un poids moléculaire moyen de 70 000 ou moins.

3. Feuille d'acier composite selon la revendication 1 ou la revendication 2, dans laquelle la couche de résine de polyester présente une épaisseur dans la plage allant de 10 à 60 μm.

4. Feuille d'acier composite selon la revendication 1, la revendication 2 ou la revendication 3, dans laquelle la résine de polyester est pratiquement amorphe.